# FASCICULE DE BREVET EUROPEEN

(11) **EP 3 264 329 B1**
(45) Date de publication et mention de la délivrance du brevet: **11.09.2019**
(21) Numéro de dépôt: 17178218.8
(22) Date de dépôt: 27.06.2017
(51) Int. Cl.: G06K 9/00, G06K 9/20

(54) **PROCEDE ET DISPOSITIF DE DETECTION DE FRAUDE PAR EXAMEN A DEUX FOCALES DISTINCTES LORS D'UNE RECONNAISSANCE AUTOMATIQUE D'UN VISAGE**
VERFAHREN UND VORRICHTUNG ZUR DETEKTION VON BETRUG DURCH ÜBERPRÜFUNG MIT ZWEI VERSCHIEDENEN FOKALZONEN BEI DER AUTOMATISCHEN ERKENNUNG EINES GESICHTS
A METHOD AND A DEVICE FOR DETECTING FRAUD BY EXAMINATION USING TWO DIFFERENT FOCAL LENGTHS DURING AUTOMATIC FACE RECOGNITION

(30) Priorité: 29.06.2016 FR 1656121
(43) Date de publication de la demande: 03.01.2018
(73) Titulaire: Idemia Identity & Security France, 92400 Courbevoie (FR)
(72) Inventeur: RIEUL, François, 92400 Courbevoie (FR); BEAUDET, Jean, 92400 Courbevoie (FR); CHU, Baptiste, 92400 Courbevoie (FR)
(74) Mandataire: Lavialle, Bruno François Stéphane

(56) Documents cités:
- WO-A1-2016/084072
- US-A1- 2013 215 275
- US-A1- 2016 071 275
- KEYURKUMAR PATEL ET AL: "Secure Face Unlock: Spoof Detection on Smartphones", IEEE TRANSACTIONS ON INFORMATION FORENSICS AND SECURITY, vol. 11, no. 10, 8 juin 2016 (2016-06-08), pages 2268-2283, XP055365152, US ISSN: 1556-6013, DOI: 10.1109/TIFS.2016.2578288

## Description

L'invention concerne le domaine de la reconnaissance automatique de visages à des fins d'identification ou d'autorisation d'accès par exemple à un lieu protégé ou à des informations sensibles contenues dans un appareil informatique.

### ARRIERE PLAN DE L'INVENTION

Les techniques de reconnaissance biométrique sont réputées pour leur grand niveau de fiabilité du fait que chaque individu possède des caractéristiques biométriques uniques.

La reconnaissance automatique de visage, aussi appelée reconnaissance faciale, fait partie des différentes techniques employées. La technique de base consiste à capturer une image du visage puis à la traiter informatiquement pour en extraire des données qui seront comparées avec des données d'une base de données d'individus identifiés.

Le développement des capteurs optiques et de composants informatiques adaptés à la reconnaissance biométrique permet aujourd'hui une utilisation courante des technologies de reconnaissance biométrique.

C'est le cas, par exemple, des terminaux de télécommunication de type « smartphone » qui utilisent la caméra frontale de l'appareil pour capturer l'image d'un utilisateur afin d'autoriser le déverrouillage de l'appareil si les caractéristiques du visage dont l'image a été capturée correspondent à celles d'un individu enregistré dans une mémoire du terminal.

Les systèmes de reconnaissance biométrique de visage sont sujets à des tentatives de fraudes en vue de se faire passer pour un utilisateur autorisé par exemple pour accéder à des données ou à un lieu sans autorisation.

Une des méthodes pratiquées par les fraudeurs pour duper les systèmes de reconnaissance biométrique consiste à présenter devant le capteur optique une image fixe ou animée d'un visage appartenant à un individu accrédité. A l'origine, l'image était imprimée mais est maintenant simplement affichée sur l'écran d'un équipement électronique de type « smartphone », tablette multimédia ou ordinateur.

Comme il existe des programmes permettant de détecter les cadres ou bordures de l'écran, le fraudeur prend garde à ce que les bords de l'écran ne soient pas visibles du capteur optique en ajustant la taille du visage affiché à l'écran et la distance séparant l'écran et le capteur. Un tel programme est par exemple connu du document Keyurkumar Patel et al., « Secure Face Unlock : Spoof Détection on Smartphones », IEEE Transactions on Information Forensics and Security, Vol. 11, n°10, 8 juin 2016, pages 2268-2283. Un tel programme est également connu du document WO2016/089072.

Il est par ailleurs connu des équipements électroniques comportant un capteur optique à champ relativement étroit pour prendre des images de type portrait et un capteur optique à champ relativement large pour prendre des images de groupes d'individus.

### OBJET DE L'INVENTION

Un but de l'invention est de sécuriser la reconnaissance automatique d'un visage.

### RESUME DE L'INVENTION

A cet effet, on prévoit, selon l'invention, un procédé de reconnaissance automatique de visages, le procédé comprenant, lors d'une phase de détection de fraude, les étapes suivantes :
- acquisition d'au moins une première image du visage au moyen d'un premier capteur ayant un premier angle de champ,
- sensiblement simultanément, acquisition d'au moins une deuxième image du visage au moyen d'un deuxième capteur ayant un deuxième angle de champ, les capteurs ayant des champs couvrant une même zone de l'espace et le premier angle de champ étant supérieur au deuxième angle de champ,
- analyse de la première image pour vérifier une absence de bordure d'écran autour du visage,
- analyse de la deuxième image pour vérifier une absence d'effet de moiré,
- détecter une absence de fraude en l'absence de bordure d'écran et d'effet de moiré.

Ainsi, sensiblement au même moment sont capturées deux images avec des champs différents (par sensiblement simultanément, on entend que les deux images sont capturées simultanément ou avec un décalage inférieure à quelques dixièmes de secondes). La première image permet de détecter une éventuelle bordure d'écran autour du visage et la deuxième image permet de distinguer dans l'image un effet de moiré caractéristique d'une image affichée sur un écran. Même si le fraudeur approche suffisamment l'écran du capteur d'image pour que les bords de l'écran ne soient pas visibles sur les images prises, l'analyse de la deuxième image va révéler que le visage présenté devant le capteur est une image affichée sur un écran.

Selon une caractéristique avantageuse, le procédé comprend une phase de reconnaissance, cette phase étant réalisée par analyse de la deuxième image prise au moyen du deuxième capteur.

L'invention a également comme objet un dispositif de capture d'images, comprenant une unité de commande reliée à un premier capteur d'image ayant un premier angle de champ et à un deuxième capteur d'image ayant un deuxième angle de champ. Les capteurs sont orientés pour avoir des champs couvrant une même zone de l'espace (c'est-à-dire que, bien que différents, les champs ont une zone commune), le premier angle de champ étant supérieur au deuxième angle de champ. L'unité de commande est agencée pour mettre en oeuvre le procédé de l'invention.

D'autres caractéristiques et avantages de l'invention ressortiront à la lecture de la description qui suit d'un mode de mise en oeuvre particulier non limitatif de l'invention.

### BREVE DESCRIPTION DES DESSINS

Il sera fait référence aux figures annexées représentant un schéma d'ensemble d'un dispositif de capture d'images selon l'invention.

### DESCRIPTION DETAILLEE DE L'INVENTION

En référence aux figures, le dispositif de capture d'images pour reconnaissance de visage selon l'invention comprend un bâti 1 délimitant une zone de capture et contenant une unité de commande 10 reliée à un premier capteur d'image 11 et à un deuxième capteur d'image 12.

De manière connue de tous, le bâti 1 est un boîtier qui peut être supporté sur un mur à hauteur d'homme.

Le premier capteur d'image 11 a ici un premier angle de champ 21 et le deuxième capteur d'image 12 a ici un deuxième angle de champ 22 de manière à ce que les capteurs d'image 11 et 12 aient des champs couvrant une même zone de l'espace et que ces champs soient orientés et centrés en direction de la position de la tête d'un candidat se présentant devant le dispositif.

Le premier angle de champ 21 est supérieur au deuxième angle de champ 22.

Le deuxième capteur d'image 12 a une résolution d'image 32 spécifiquement adaptée pour permettre la détection d'un effet de moiré sur les images qu'il fournit.

L'unité de commande 10 comporte un microcontrôleur qui comprend un processeur, une mémoire vive, une mémoire morte, et au moins une interface d'entrées-sorties.

L'unité de commande 10 est agencée pour exécuter un programme de traitement d'image permettant la détection d'effet de contraste changeant, indépendamment des effets d'ombre, ou effet de moiré, et la détection de bordures qui apparaissent lorsque l'on présente un écran, par exemple un écran de tablette multimédia face aux capteurs.

Ainsi, avec une acquisition réalisée par le capteur 11 ayant un grand angle de champ, la détection d'un cadre autour du visage de l'individu cible est facilitée. En complément, avec une acquisition réalisée par le capteur 12 ayant un petit angle de champ, la détection d'effet de moiré est facilitée.

Bien entendu les expressions « grand angle » et « petit angle » ne correspondent pas à des spécifications générales mais à des spécifications relatives entre elles.

L'unité de commande 10 est programmée pour commander les deux capteurs 11, 12 et réaliser le procédé conforme à l'invention.

Ce procédé comprend une phase de positionnement, une phase de détection de fraude et une phase de reconnaissance.

La phase de positionnement d'un candidat en regard du deuxième capteur 12 comprend les étapes de :
- capturer au moins une image au moyen du premier capteur 11,
- détecter une position du visage du candidat dans ladite image,
- déterminer à partir de la position détectée au moins une indication de positionnement à fournir au candidat pour qu'il positionne son visage dans le champ du deuxième capteur 12.

Cette indication de positionnement prend par exemple la forme d'un allumage d'une flèche lumineuse dans la direction dans laquelle le candidat doit se déplacer pour que son visage soit dans le champ du deuxième capteur 12. A cette fin, le dispositif comporte un système d'aide au positionnement 14 du visage 13 devant le deuxième capteur 12 en utilisant le premier capteur 11. Ce système d'aide comprend ici un écran orienté vers le candidat et relié à l'unité de commande 10.

La phase de détection de fraude comprend les étapes suivantes :
- capturer au moins une première image du visage 13 au moyen du premier capteur 11 ;
- capturer au moins une deuxième image du visage 13 au moyen du deuxième capteur 12 ;
- analyser la première image pour vérifier une absence d'un cadre autour du visage 13 ;
- analyser la deuxième image pour vérifier une absence d'effet de moiré ;
- valider l'authenticité de l'acquisition faciale si les analyses révèlent l'absence de cadre et l'absence de moiré.

De manière systématique, les acquisitions optiques sont faites de façon simultanée.

On notera que le deuxième capteur d'image 12 a une résolution d'image spécifiquement adaptée pour permettre la détection d'un effet de moiré lorsque le visage est à une distance qui s'avère trop proche pour permettre au premier capteur d'image 11 de réaliser la capture d'un contour autour du visage.

En variante, l'acquisition et l'analyse portent sur plusieurs images d'un enregistrement vidéo.

En variante encore, les deux capteurs 11, 12 sont commandés pour capturer plusieurs images sous forme d'enregistrements vidéos de plusieurs secondes.

L'unité de commande 10 est, à cet effet, programmée pour réaliser un contrôle de sécurité additionnel.

Le procédé comprend, alors, l'étape supplémentaire de détection de mouvements.

La phase de reconnaissance, connue en elle-même, comprend les étapes de :
- détecter des caractéristiques biométriques dans une image capturée par le deuxième capteur 12 (par exemple une image utilisée pour la phase de détection de fraude) ;
- comparer les caractéristiques biométriques détectées à des caractéristiques biométriques mémorisées dans une base de données à laquelle l'unité de commande 10 a accès (la base de données contenant des caractéristiques biométriques mémorisées appartenant à des personnes identifiées) ;
- calculer un score reflétant la proximité entre les caractéristiques biométriques détectées et les caractéristiques biométriques mémorisées de chaque personne identifiée ;
- comparer les scores à un seuil pour reconnaître le candidat.

Bien entendu, l'invention n'est pas limitée au mode de réalisation décrit mais englobe toute variante entrant dans le champ de l'invention telle que définie par les revendications.

En particulier il est possible de choisir d'autres spécifications d'angles de champs et de résolutions respectifs pour les capteurs d'images 11 et 12.

Le dispositif peut être incorporé à un terminal de télécommunication.

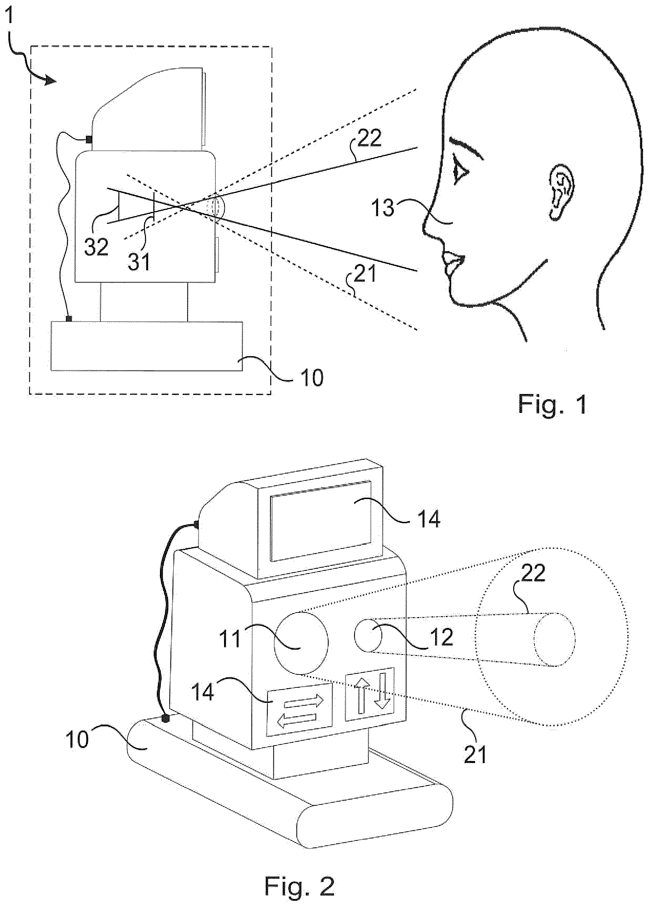

## Revendications

1. Procédé de reconnaissance automatique de visage, le procédé comprenant, lors d'une phase de détection de fraude, les étapes suivantes :
- acquisition d'au moins une première image du visage au moyen d'un premier capteur ayant un premier angle de champ,
- sensiblement simultanément, acquisition d'au moins une deuxième image du visage au moyen d'un deuxième capteur ayant un deuxième angle de champ, les capteurs ayant des champs couvrant une même zone de l'espace et le premier angle de champ étant supérieur au deuxième angle de champ,
- analyse de la première image pour vérifier une absence de bordure d'écran autour du visage,
- analyse de la deuxième image pour vérifier une absence d'effet de moiré,
- détecter une absence de fraude en l'absence de bordure d'écran et d'effet de moiré.

2. Procédé selon la revendication 1, dans lequel l'acquisition et l'analyse portent sur plusieurs images d'un enregistrement vidéo.

3. Procédé selon l'une des revendications précédentes, comprenant une phase de positionnement d'un candidat en regard du deuxième capteur, cette phase comprenant les étapes de capturer au moins une image au moyen du premier capteur, de détecter une position du visage du candidat dans ladite image et de déterminer à partir de la position détectée au moins une indication de positionnement à fournir au candidat pour qu'il positionne son visage dans le champ du deuxième capteur.

4. Procédé selon l'une des revendications précédentes, comprenant une phase de reconnaissance, cette phase étant réalisée par analyse de la deuxième image prise au moyen du deuxième capteur.

5. Dispositif de capture d'images, comprenant une unité de commande reliée à un premier capteur d'image ayant un premier angle de champ et à un deuxième capteur d'image ayant un deuxième angle de champ, les capteurs étant orientés pour avoir des champs couvrant une même zone de l'espace et le premier angle de champ étant supérieur au deuxième angle de champ, l'unité de commande étant agencée pour exécuter un programme qui est contenu dans une mémoire de l'unité de commande et qui comporte des instructions mettant en oeuvre le procédé selon l'une quelconque des revendications précédentes.

6. Dispositif selon la revendication 5, comportant un système d'aide au positionnement du visage devant le deuxième capteur en utilisant le premier capteur.

7. Dispositif selon l'une des revendications 5 et 6, pour lequel le deuxième capteur d'image a une résolution d'image spécifiquement adaptée pour permettre une détection d'un effet de moiré lorsque le visage est trop proche du premier capteur pour permettre au premier capteur d'image de réaliser la capture de contour de visage.

8. Terminal de télécommunication comprenant un dispositif selon l'une quelconque des revendications 5 à 7.

## Patentansprüche

1. Verfahren zur automatischen Gesichtserkennung, wobei das Verfahren während einer Betrugserkennungsphase die folgenden Schritte umfasst:
- Erfassung mindestens eines ersten Bildes des Gesichts mittels eines ersten Sensors, der einen ersten Bildwinkel hat,
- nahezu gleichzeitige Erfassung mindestens eines zweiten Bildes des Gesichts mittels eines zweiten Sensors, der einen zweiten Bildwinkel hat, wobei die Sensoren Bildwinkel haben, die eine selbe Zone des Raumes abdecken, und der erste Bildwinkel größer als der zweite Bildwinkel ist,
- Analyse des ersten Bildes, um ein Fehlen eines Bildschirmrandes um das Gesicht herum zu verifizieren,
- Analyse des zweiten Bildes, um ein Fehlen eines Moire-Effekts zu verifizieren,
- Feststellen eines Fehlens eines Betrugs bei Fehlen eines Bildschirmrandes und eines Moiré-Effekts.

2. Verfahren nach Anspruch 1, bei dem die Erfassung und die Analyse mehrere Bilder einer Videoaufzeichnung betreffen.

3. Verfahren nach einem der vorhergehenden Ansprüche, umfassend eine Phase der Positionierung eines Kandidaten gegenüber dem zweiten Sensor, wobei diese Phase die Schritte des Erfassens mindestens eines Bildes mittels des ersten Sensors, des Erkennens einer Position des Gesichts des Kandidatens in dem genannten Bild und des Bestimmens anhand der erkannten Position mindestens eines dem Kandidaten zu liefernden Positionierungshinweises umfasst, damit er sein Gesicht in dem Bildwinkel des zweiten Sensors positioniert.

4. Verfahren nach einem der vorhergehenden Ansprüche, umfassend eine Erkennungsphase, wobei diese Phase durch Analyse des zweiten Bildes erfolgt, das mit Hilfe des zweiten Sensors aufgenommen wird.

5. Bildaufnahmevorrichtung, umfassend eine Steuereinheit, die mit einem ersten Bildsensor verbunden ist, der einen ersten Bildwinkel hat, und mit einem zweiten Bildsensor, der einen zweiten Bildwinkel hat, wobei die Sensoren ausgerichtet sind, um Bildwinkel zu haben, die eine selbe Zone des Raums abdecken, und wobei der erste Bildwinkel größer als der zweite Bildwinkel ist, wobei die Steuereinheit ausgebildet ist, um ein Programm auszuführen, das in einem Speicher der Steuereinheit enthalten ist und das Anweisungen umfasst, die das Verfahren nach einem der vorhergehenden Ansprüche ausführen.

6. Vorrichtung nach Anspruch 5, umfassend ein Hilfssystem zur Hilfe bei der Positionierung des Gesichts vor dem zweiten Sensor unter Verwendung des ersten Sensors.

7. Vorrichtung nach einem der Ansprüche 5 und 6, bei der der zweite Bildsensor eine Bildauflösung hat, die speziell angepasst ist, um eine Erkennung eines Moire-Effekts zu ermöglichen, wenn das Gesicht dem ersten Sensor zu nah ist, um dem ersten Bildsensor zu ermöglichen, die Erfassung der Gesichtskontur durchzuführen.

8. Telekommunikationsterminal, umfassend eine Vorrichtung nach einem der Ansprüche 5 bis 7.

## Claims

1. An automatic face recognition method, the method comprising, during a fraud detection stage, the following steps:
• acquiring at least one first image of the face by means of a first sensor having a first field angle;
• substantially simultaneously, acquiring at least one second image of the face by means of a second sensor having a second field angle, the sensors having fields of view covering a common zone in three-dimensional space, and the first field angle being wider than the second field angle;
• analyzing the first image to verify that there is no screen border around the face;
• analyzing the second image to verify that there is no moiré effect; and
• detecting the absence of fraud when there is no screen border and no moire effect.

2. A method according to claim 1, **characterized in that** acquisition and analysis are performed on a plurality of images from a video recording.

3. A method according to either preceding claim, comprising a positioning stage for positioning a candidate to face the second sensor, this stage comprising the steps of capturing at least one image by means of the first sensor, of detecting a position of the candidate's face in said image, and of determining at least one positioning indication to be provided to the candidate in order to cause the candidate to position his/her face in the field of view of the second sensor.

4. A method according to any preceding claim, comprising a recognition stage, this stage being performed by analyzing the second image taken by means of the second sensor.

5. An image capture device, comprising a control unit connected both to a first image sensor having a first field angle and also to a second image sensor having a second field angle, the sensors being pointed to have fields of view covering a common zone in three-dimensional space and the first field angle being wider than the second field angle, the control unit being arranged to execute a program which is contained in a memory of the control unit and which includes instructions implementing the method according to any preceding claim.

6. A device according to claim 5, including an assistance system for assisting with positioning the face in front of the second sensor by using the first sensor.

7. A device according to claim 5 or claim 6, wherein the second image sensor has an image resolution that is specifically adapted to enable a moire effect to be detected when the face is too close to the first sensor to enable the first image sensor to capture the outline of the face.

8. A telecommunications terminal including a device according to any one of claims 5 to 7.
